## Europäisches Patentamt
## European Patent Office
## Office européen des brevets

(19)

(11)   **EP 1 170 652 A1**

(12)   # DEMANDE DE BREVET EUROPEEN

(43) Date de publication:
**09.01.2002   Bulletin 2002/02**

(51) Int Cl.⁷: **G05D 1/02**, B60K 31/00

(21) Numéro de dépôt: **01401812.1**

(22) Date de dépôt: **06.07.2001**

| | |
|---|---|
| (84) Etats contractants désignés:<br>**AT BE CH CY DE DK ES FI FR GB GR IE IT LI LU MC NL PT SE TR**<br>Etats d'extension désignés:<br>**AL LT LV MK RO SI**<br><br>(30) Priorité: **06.07.2000  FR 0008807** | (71) Demandeur: **Renault**<br>**92100 Boulogne Billancourt (FR)**<br><br>(72) Inventeur: **Chabanon, Christian**<br>**27700 Tosny (FR)** |

(54)   **Procédé de régulation adaptive de la distance entre deux véhicules mobiles**

(57)   L'invention concerne un procédé de régulation adaptative de la distance entre deux véhicules automobiles (S et C) circulant dans la même direction, le véhicule régulé (S) comprenant notamment des moyens embarqués de commande de l'accélération du véhicule selon différents scénarios routiers, définis à partir de la distance de consigne ($D_c$) entre le véhicule suiveur (S), circulant à la vitesse ($V_{ACC}$) et la cible (C) se déplaçant à la vitesse ($V_{ci}$), la distance de consigne ($D_c$) étant liée au temps de suivi ($t_s$) par la relation :

$$D_c = t_s \times V_{ci} + D_{min}$$

($D_{min}$) correspondant à la distance de consigne lorsque la vitesse de la cible est nulle,

tel qu'il établit une loi de contrôle de l'accélération en réglant graduellement le temps de suivi ($t_s$) entre le véhicule régulé et la cible, en fonction du comportement du conducteur défini par son style de conduite et son caractère de freinage, du trafic routier et des actions du conducteur identifiées avant et pendant la régulation de distance, évalués par quatre réseaux de neurones.

FIG.2

EP 1 170 652 A1

**Description**

La présente invention concerne un procédé de régulation adaptative de la distance entre deux véhicules circulant dans la même direction, destiné à s'appliquer en particulier aux systèmes de régulation de la distance et de régulation de la vitesse dans le but d'assister le conducteur dans sa tâche de conduite et d'améliorer son confort de conduite.

Dans le cadre de la régulation de distance, ou "Adaptative Cruise Control" (A.C.C.), qui permet au véhicule suiveur ainsi régulé de suivre le véhicule précédent à une distance de consigne prédéterminée grâce à un contrôle automatique de l'accélération et du freinage, avec éventuellement une gestion des rapports dans le cas d'une boîte automatique, la demande de brevet français No. 97 13063, déposée au nom de RENAULT, propose l'analyse du comportement du conducteur du véhicule équipé de cette régulation. A partir de cette analyse est élaborée une stratégie adaptative avec un traitement binaire dans le but de classer le conducteur dans des classes de comportement suivant des scénarios routiers d'approche, de suivi et de déboîtement. La stratégie tient compte des intentions du conducteur, relevées à partir de ses actions sur les pédales ou sur le volant pour incrémenter ou décrémenter une classe de conducteur médiane.

Cette solution actuelle ne tient pas compte de la vitesse du véhicule équipé de l'A.C.C. dans la gestion du trafic routier et l'appréciation de sa densité, ni du caractère du freinage en temps réel. De plus, elle nécessite le stockage du comportement du conducteur et de l'état du trafic quand la régulation A.C.C. n'est pas active, ce qui prend beaucoup de place mémoire.

Pour pallier ces inconvénients, l'invention propose un procédé de régulation à base de réseaux de neurones pour estimer le style de conduite, le trafic routier et les actions du conducteur et adapter ainsi les lois de contrôle de l'accélération du véhicule en phases d'approche, de suivi, d'insertion et de déboîtement. Le procédé a pour but de régler graduellement le temps de suivi entre le véhicule équipé de l'A.C.C. et le véhicule cible, en fonction des situations routières rencontrées d'une part et des actions du conducteur identifiées avant et pendant la régulation de distance A.C.C. d'autre part.

Pour cela, l'objet de l'invention est un procédé de régulation adaptative de la distance entre deux véhicules circulant dans la même direction, le véhicule régulé suivant l'autre servant de cible et comprenant des moyens de détection et de suivi de cibles mobiles, une interface de commande par le conducteur, comprenant différentes touches placées sur le volant du véhicule pour la marche et l'arrêt de la régulation de distance, ainsi que des touches d'augmentation et de diminution de la vitesse de consigne, et des moyens embarqués de commande électronique de l'accélération du véhicule selon différents scénarios routiers, qui sont définis à partir de la distance de consigne entre le véhicule suiveur, circulant à la vitesse $V_{ACC}$ et la cible suivie se déplaçant à la vitesse $V_{ci}$, la distance de consigne étant liée au temps de suivi $t_s$ par la relation suivante :

$$D_c = t_s \times V_{ci} + D_{min}$$

$D_{min}$ correspondant à la distance de consigne lorsque la vitesse de la cible est nulle, caractérisé en ce qu'il établit une loi de contrôle de l'accélération du véhicule en réglant graduellement le temps de suivi entre le véhicule régulé et le véhicule cible, en fonction du comportement du conducteur défini par son style de conduite et son caractère de freinage, du trafic routier et des actions du conducteur identifiées avant et pendant la régulation de distance.

Selon une autre caractéristique de l'invention, le procédé de régulation adaptative comporte les étapes suivantes :

- une première étape $e_1$) d'évaluation du style de conduite du conducteur du véhicule régulé à tout instant, avant la mise en marche de la régulation comme pendant son fonctionnement ;
- une deuxième étape $e_2$) d'évaluation du caractère de freinage, réalisée lorsque la présence d'un véhicule cible est détectée et que la pression de freinage dépasse un seuil prédéterminé, cette évaluation ayant donc lieu avant la mise en marche de la régulation de distance et lorsque celle-ci est soit inactive, soit quand elle est désactivée, notamment par une pression du conducteur sur la pédale de frein ;
- une troisième étape $e_3$) de choix d'une loi de contrôle de l'accélération en phases d'approche, de suivi, de déboîtement et d'insertion, en fonction du style de conduite et du caractère de freinage du conducteur ;
- une quatrième étape $e_4$) d'estimation du trafic routier, réalisée à tout moment avant et pendant la régulation de distance ;
- une cinquième étape $e_5$) d'adaptation en fonction du trafic routier des lois initialement sélectionnées ;
- une sixième étape $e_6$) d'adaptation des lois initialement sélectionnées, en fonction des actions du conducteur sur les différentes touches de l'interface, ces actions devant être relativisées par rapport à la vitesse moyenne du trafic routier d'une part et par rapport à la vitesse de consigne sélectionnée d'autre part ;

- une septième étape $e_7$) de sélection de la loi de commande de l'accélération en fonction du scénario routier dans lequel évolue le véhicule et défini par le plan de phase ;
- une huitième étape $e_8$) d'application de la loi de commande de l'accélération pour respecter automatiquement une distance de sécurité prédéterminée avec le véhicule cible.

D'autres caractéristiques et avantages de l'invention apparaîtront à la lecture de la description d'un procédé de régulation, illustrée par les figures suivantes qui sont :

- la figure 1 : un schéma de principe d'un régulateur de distance équipant un véhicule, selon l'invention ;

- la figure 2 : un schéma de localisation des scénarios routiers, dans le plan de phase de la vitesse et de la distance relative entre deux véhicules en mouvement ;

- la figure 3 : l'organigramme du procédé de régulation de distance selon l'invention.

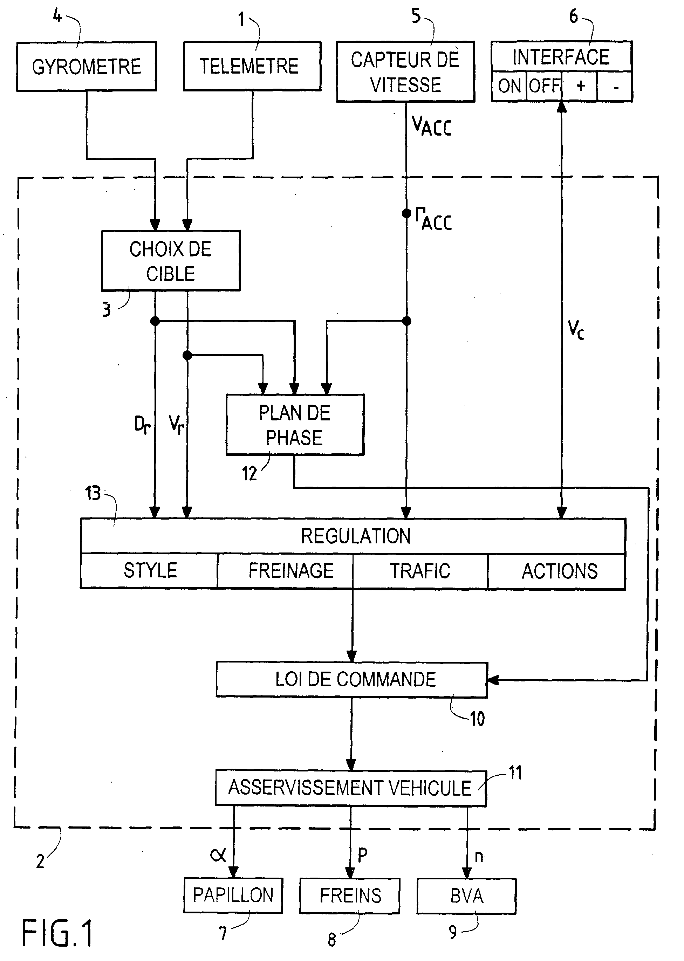

Selon le schéma de principe de la figure 1, un véhicule équipé d'un régulateur de distance comporte un télémètre 1, de type radar ou infrarouge par exemple, placé à l'avant et délivrant des informations relatives aux objets de la scène routière à l'avant du véhicule, constitués par les véhicules circulant devant le véhicule équipé, les bords de la route, les panneaux, etc.... Il peut comporter aussi un gyromètre 4, calculant le rayon de courbure de la route.
Ces informations sont envoyées à un calculateur électronique 2 qui calcule les distances $D_r$ et les vitesses $V_r$ relatives de l'ensemble des cibles, dans un premier module 3 lorsque cela n'est pas fait par le télémètre, et qui les traite ensuite pour sélectionner la cible à prendre en compte parmi les différents objets détectés.
Le véhicule équipé d'un système A.C.C. comporte également un capteur 5 de vitesse embarqué, délivrant une information sur sa vitesse $V_{ACC}$ et son accélération $\Gamma_{ACC}$ par traitement de la vitesse, et une interface 6 de commande entre le conducteur et le régulateur, qui permet au conducteur de choisir une vitesse de consigne $V_c$ et de le renseigner à tout moment sur l'état du système.
Le calculateur 2 va alors élaborer une loi de régulation de la distance du véhicule, dans un module 13, à partir de ces informations sur le véhicule équipé lui-même et sur le véhicule cible, et de la vitesse de consigne choisie par le conducteur. Cette loi permet d'établir dans un module 10, une accélération de consigne $\Gamma_c$ sur laquelle va être asservi le fonctionnement du véhicule par le calculateur, dans un module 11, qui fixe une consigne d'ouverture $\alpha$ du papillon 7 d'admission d'air ou d'injection diesel, une consigne de pression P du freinage appliquée aux freins 8 et une consigne de rapport n de la boîte de vitesses automatique 9.
A tout instant, le régulateur de distance ACC détermine, dans un module 12 recevant en entrée la vitesse $V_r$ et la distance $D_r$ relatives de la cible, ainsi que la vitesse du véhicule équipé $V_{ACC}$, dans quel scénario se trouve le véhicule équipé, c'est-à-dire s'il est en situation ou phase d'approche sur un véhicule cible, en phase de suivi, en phase de déboîtement détectée par la mise en route d'un clignotant par exemple, ou simplement en phase de régulation de vitesse si aucune cible n'est détectée devant le véhicule.
Les différents scénarios routiers sont définis à partir de la distance de consigne $D_c$ entre le véhicule suiveur S, circulant à la vitesse $V_{ACC}$, et la cible suivie C se déplaçant à la vitesse $V_{ci}$. La distance de consigne $D_c$ est liée au temps de suivi $t_s$ par la relation E :

$$(E) \qquad D_c = t_s \times V_{ci} + D_{min}$$

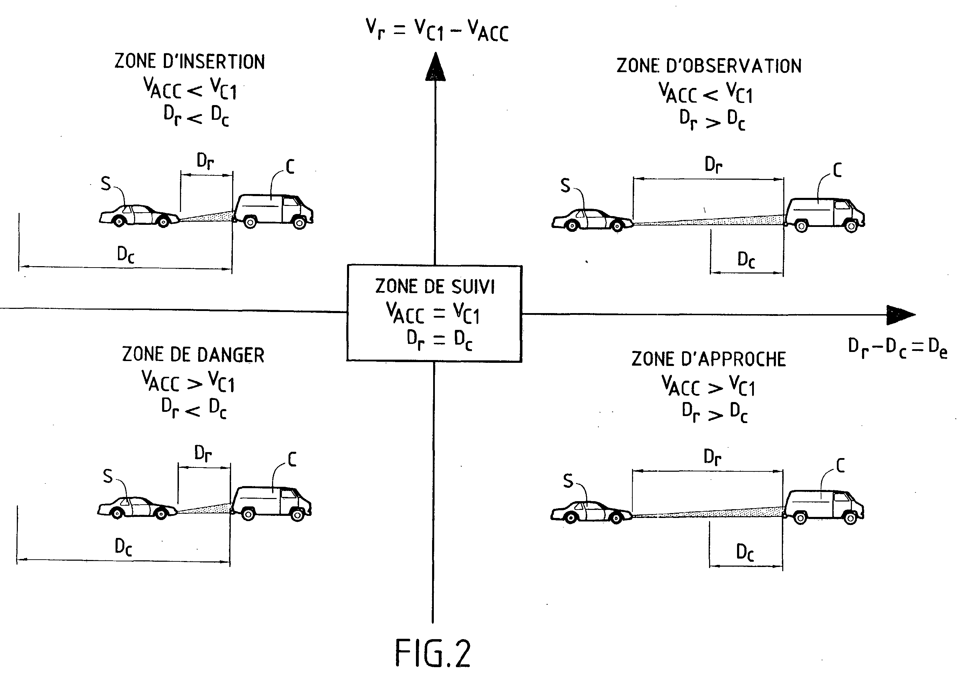

$D_{min}$ correspondant à la distance de consigne lorsque la vitesse de la cible est nulle. Pour déterminer cette distance de consigne, adaptée au style de conduite du conducteur, le procédé analyse son comportement en permanence.
Leur localisation dans le plan de phase des vitesses et des distances relatives apparaît sur la figure 2, dont l'axe des ordonnées représente la vitesse relative $V_r = V_{ci} - V_{ACC}$ entre les deux véhicules C et S, en fonction de l'erreur de distance $D_e$ entre leur distance relative $D_r$ et la distance de consigne $D_c$ : $D_e = D_r - D_c$, représentée sur l'axe des abscisses. Lorsque l'erreur de distance $D_e$ est négative, c'est-à-dire que le véhicule cible C est à une distance du véhicule suiveur S inférieure à la distance de consigne $D_c$, l'axe des abscisses est gradué en pourcentage d'intrusion à l'intérieur de la distance de consigne. Les différentes zones décrites par la suite pour définir les scénarios routiers sont localisées à partir de la distance de consigne, donc du temps de poursuite qui en découle.
Un premier scénario d'observation est défini tant que la cible détectée est en dehors de la distance de consigne avec une vitesse relative progressive, c'est-à-dire qu'elle s'éloigne avec une vitesse $V_{ci}$ supérieure à la vitesse $V_{ACC}$ du véhicule suiveur S. Un tel scénario se produit dans une zone dite d'observation du plan de phase, qui est représentée dans le quart supérieur droit de la figure 2.

Un deuxième scénario d'approche correspond à l'approche par le véhicule suiveur S d'une cible C circulant sur sa voie, à vitesse inférieure, l'obligeant à décélérer pour adapter sa vitesse $V_{ACC}$ à celle de la cible $V_{ci}$ plus lente que lui. La zone d'approche est représentée sur le quart inférieur droit de la figure 2.

Un troisième scénario, dit d'insertion ou de déboîtement d'une cible C devant un véhicule suiveur S, se produit quand le véhicule cible est à l'intérieur de la distance de consigne, mais roule plus vite que le véhicule suiveur, ce qui correspond à deux types de situations routières :

- l'insertion d'un véhicule plus rapide dans la voie du véhicule en régulation et devenant une cible pour ce dernier ;
- le déboîtement du véhicule suiveur pour dépasser le véhicule cible, ce déboîtement sur une voie adjacente le plaçant derrière un nouveau véhicule cible plus rapide.

Un quatrième scénario dit de danger correspondant au fait que le véhicule suiveur S est à l'intérieur de la distance de consigne $D_c$, avec une vitesse $V_{ACC}$ supérieure à celle de la cible $V_{ci}$. Il peut se produire entre les phases d'approche et de suivi, ou dans le cas d'un dépassement par une cible qui se rabat brutalement devant le véhicule lors d'une manoeuvre dite en "queue de poisson", ou de freinage de la cible C en cours de suivi. La zone de danger est représentée sur la figure 2 dans le quart inférieur gauche du plan de phase.

A tout instant également, avant la mise en marche de la régulation comme pendant son fonctionnement, le régulateur de distance ACC évalue le style de conduite du conducteur du véhicule régulé, au moyen d'un réseau de neurones.

Un réseau de neurones est constitué d'éléments non linéaires, des neurones, liés entre eux par un graphe non récursif et organisés en plusieurs couches. Il comprend une première couche d'entrée recevant des valeurs d'entrée $E_i$, au moins une couche cachée et une couche de sortie délivrant des valeurs de sortie $S_i$. Chaque valeur de sortie $S_i$ est une fonction sigmoïde $S_i$ de son activation, qui est la somme des produits de chaque entrée $E_i$ par un poids $W_i$.

Pour le style de conduite, le régulateur de distance selon l'invention comporte un premier réseau de neurones dont les entrées reçoivent:

- la vitesse du véhicule $V_{ACC}$,
- le régime $N_{ACC}$ du moteur,
- l'angle $\alpha_{ACC}$ du papillon d'admission d'air,
- le rapport $n_{ACC}$ de la boîte de vitesses automatique,

ainsi qu'éventuellement l'angle $\beta_v$ du volant et l'accélération $\Gamma_t$ transversale du véhicule qui complètent la reconnaissance du style de conduite dans les virages pris par le véhicule.

Ce réseau de neurones délivre en sortie trois possibilités d'appartenance à trois états qualifiés respectivement de "calme", de "dynamique" et de "sportif", ces probabilités étant comprises entre les valeurs 0 et 1.

Le caractère de freinage est évalué au moyen d'un deuxième réseau de neurones qui est activé lorsque les deux conditions suivantes sont remplies : la présence d'un véhicule cible doit être détectée et la pression de freinage doit dépasser un seuil prédéterminé correspondant au décollement des mâchoires de frein ou des plaquettes de frein. L'activation de cette unité de calcul a donc lieu avant la mise en marche de la régulation de distance et lorsque celle-ci est soit inactive, soit quand elle est désactivée, notamment par une pression du conducteur sur la pédale de frein. En effet, le caractère du freinage du conducteur est analysé par son action sur la pédale de frein. On considère que le caractère de freinage est une constante quel que soit le style de conduite et l'état du trafic. En effet, si le conducteur a une attitude prudente, il gardera celle-ci durant tout le trajet.

Les entrées de ce réseau de neurones reçoivent pour informations :

- la pression de freinage $P_f$ exercée par le conducteur,
- la décélération $\Gamma_{dec}$ du véhicule pendant le freinage,
- la distance $D_r$ et la vitesse $V_r$ relatives de la cible par rapport au véhicule régulé.

Les sorties calculées par le réseau sont trois possibilités d'appartenance à trois états de freinage qualifiés de "précoce", de "standard" et de "tardif', comprises entre les valeurs 0 et 1.

Une fois évalués ces deux critères représentatifs du comportement du conducteur, le calculateur électronique détermine les lois de commande de l'accélération du véhicule en phases d'approche, de suivi, d'insertion et de déboîtement, au nombre de neuf au maximum correspondant aux neuf combinaisons possibles entre le style de conduite et le caractère de freinage.

Le tableau 1, représenté en annexe, est un exemple de cinq lois $L_1$ à $L_5$ de contrôle de l'accélération du véhicule dans lequel les lois concernant un freinage standard sont également appliquées pour un freinage qualifié de tardif. Pour un style de conduite qualifié de calme associé à un freinage qualifié de précoce, la loi $L_1$ impose un temps de suivi $t_s$ maximal de deux secondes. Pour un même style calme, mais un freinage soit standard, soit tardif, la loi $L_2$ impose un temps de suivi $t_s$ plus court, de 1,6 seconde par exemple. On constate que plus le style est sportif et plus le freinage est tardif, plus le temps de suivi est court, ne pouvant descendre cependant en dessous de 1 seconde.

La sélection d'une loi d'approche parmi 5, dans le cas particulier du tableau 1, d'une loi de suivi parmi 5, d'une loi d'insertion parmi 5, et d'une loi de déboîtement parmi 3, car on constate qu'il n'y a généralement que trois façons de déboîter, permet au régulateur de distance ACC d'agir suivant la situation rencontrée. Dans les quatre scénarios routiers sélectionnés, la loi $L_1$ donne au conducteur la sensation la plus calme et la plus confortable alors que la loi $L_5$ est la plus sportive et la plus dynamique ou la loi $L_3$ dans le cas de déboîtement, la loi $L_1$ est la plus prudente correspondant à une accélération juste nécessaire pour doubler, alors que la loi $L_5$ est la moins prudente correspondant à l'accélération maximale délivrée par le moteur.

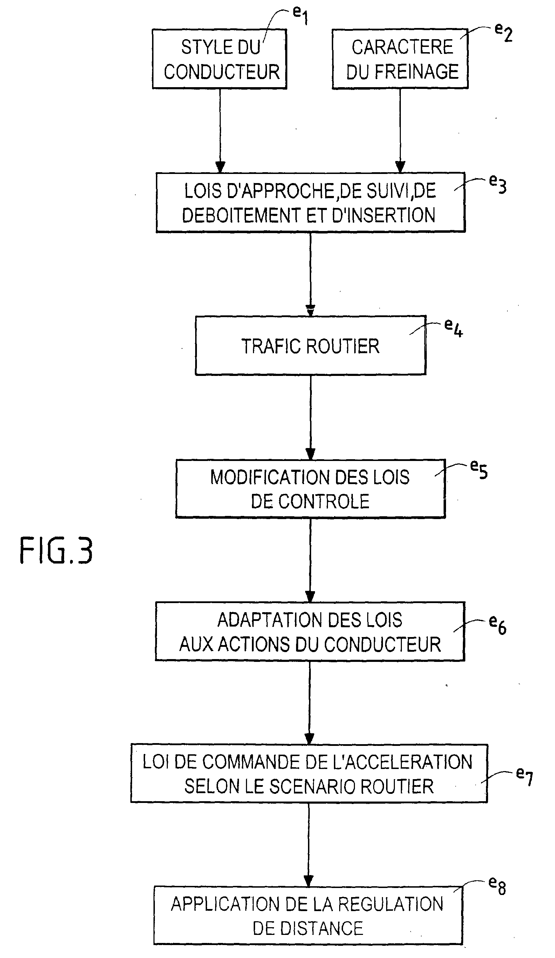

Comme le montre l'organigramme de la figure 3, après les étapes d'estimation $e_1$) du style du conducteur et $e_2$) du caractère du freinage, destinées à réaliser l'étape $e_3$) de choix d'une loi de contrôle de l'accélération en phases d'approche, de suivi, de déboîtement et d'insertion, le procédé de régulation selon l'invention remplit une quatrième étape $e_4$) d'estimation du trafic routier en vue d'une meilleure adéquation des lois avec la densité du trafic. Cette estimation est réalisée à tout moment avant et pendant la régulation de distance.

Pour cela, selon une caractéristique essentielle, le régulateur de distance comporte un troisième réseau de neurones dont les entrées reçoivent :

- la vitesse $V_{ACC}$ du véhicule régulé, et
- la liste des véhicules circulant à l'avant de ce dernier, sur toutes les voies de circulation, chaque véhicule cible étant caractérisé par sa distance $D_r$ et sa vitesse $V_r$ relatives par rapport au véhicule régulé, ainsi que par sa position ou son azimut.

Ce troisième réseau de neurones calcule trois probabilités d'appartenance à des états de trafic qualifiés respectivement de "fluide", de "normal" ou de "dense", ces probabilités étant comprises entre les valeurs 0 et 1.

Lors d'une nouvelle étape $e_5$), les lois de régulation de la distance en phases d'approche, de déboîtement, de suivi et d'insertion sélectionnées auparavant sont modifiées en fonction de la densité du trafic appréciée dans la quatrième étape du procédé.

Le tableau 2, représenté en annexe, est un exemple de modification de la loi $L_i$ sélectionnée initialement pour les quatre scénarios routiers d'approche, de suivi, de déboîtement et d'insertion, en fonction de la densité du trafic routier. On constate qu'en approche, le procédé adopte un style sécuritaire quand le trafic devient de plus en plus dense, en augmentant le temps de suivi $t_s$, donc en provoquant le freinage du véhicule plus tôt par le choix de la loi $L_{i-1}$ ou $L_{i-2}$. Par contre, en suivi de la cible, on diminue le temps de suivi, donc la distance entre les véhicules, pour que des véhicules ne viennent pas s'insérer entre le véhicule ACC et sa cible alors que le trafic s'intensifie. C'est pourquoi le procédé choisit de modifier la loi initiale $L_i$ et de proposer les lois $L_{i+1}$ et $L_{i+2}$. Dans le cas d'un suivi d'une cible se prolongeant pendant une durée importante, supérieure à un seuil prédéterminé, le procédé adopte une approche sécuritaire en augmentant le temps de suivi, donc la distance entre les deux véhicules, en cas de baisse de vigilance du conducteur suiveur. Pour cela, le procédé remplace la loi initiale $L_i$ par la loi $L_{i-1}$ dont le temps de suivi est supérieur, après un délai $t_1$ de 20 minutes par exemple, puis par la loi $L_{i-2}$ si la durée est supérieure à un second seuil fixe $t_2$, par exemple de 40 minutes, comme le montre le tableau 3 joint en annexe.

En déboîtement, la loi reste la loi initialement choisie $L_i$, si ce déboîtement suit, dans un délai suffisamment court, un scénario d'approche d'une cible. Si ce délai est dépassé, le procédé remplace la loi $L_i$ par la loi $L_{i-1}$ avec augmentation du temps de suivi par prudence et pour éviter de surprendre le conducteur par une accélération trop brutale.

Enfin, en scénario d'insertion d'un autre véhicule dans la file, la loi reste celle choisie initialement $L_i$ pour ne pas modifier le temps de suivi.

En situation de virage, le véhicule régulé perd la cible suivie, ce qui conduit le procédé à considérer le trafic comme fluide, induisant le choix d'une loi $L_{i-1}$ ou $L_{i-2}$ au temps de suivi plus long que celui de la loi $L_i$ initiale en entrée de virage. Ceci garantit la sécurité du véhicule équipé, à la reprise de la cible en sortie de virage.

Selon une caractéristique importante du procédé selon l'invention, la détermination du trafic routier comme celle du style de conduite, sont effectuées par des réseaux de neurones, que le procédé de régulation soit activé ou non, sauf s'il est en panne. Ainsi, il est inutile de mémoriser le comportement du conducteur, le caractère du freinage et l'état du trafic routier lorsque le procédé ACC n'est plus activé, puisqu'ils sont calculés dès la mise en route du véhicule.

Selon une autre caractéristique essentielle de l'invention, au cours d'une nouvelle étape $e_6$), le procédé de régulation de distance adapte les lois initialement sélectionnées en fonction du comportement du conducteur à l'étape $e_5$), aux actions du conducteur sur les différentes touches d'interface placées sur le volant du véhicule. En effet, le conducteur peut mettre en marche ou arrêter la régulation de distance de son véhicule par les touches "Resume" et "OFF" respectivement, ainsi qu'augmenter et diminuer la vitesse de consigne par les touches "+" et "-". Ces actions sur les touches au volant doivent être relativisées par rapport à la vitesse moyenne du trafic routier d'une part et par rapport à la vitesse de consigne sélectionnée d'autre part.

Concernant les touches "+" et "-", il y a deux types d'action du conducteur. Un premier type consiste à ajuster la vitesse de consigne à une valeur proche de la vitesse moyenne de l'ensemble des véhicules constituant le trafic routier. Dans ce cas, le conducteur, généralement débutant, agit par petites impulsions pour corriger en permanence cette valeur de consigne, car il souhaite garder une maîtrise du pilotage et ne pas déléguer la fonction au système. Alors, le procédé de régulation selon l'invention ne tient pas compte de ces petites variations pour l'ajustement de la loi de commande.

Le second type d'action sur les touches au volant consiste à vouloir fixer une vitesse de consigne bien au-dessus ou bien en dessous de la vitesse moyenne du trafic. Deux cas se présentent : quand le conducteur appuie sur la touche "+" pour augmenter la vitesse de consigne, le procédé considère qu'il manifeste son intention de se rapprocher de la cible qu'il suit et donc modifie la loi initiale $L_i$ applicable en phase d'approche quel que soit l'état du trafic routier en diminuant la distance et le temps de suivi. Le tableau 4 en annexe montre que, lorsque le trafic augmente pendant les phases de suivi et de déboîtement, le procédé choisit la loi $L_{i+1}$ au temps de suivi plus court que celui de la loi initiale $L_i$.

Le second cas correspond aux appuis du conducteur sur la touche "-", considéré comme manifestant son intention de s'éloigner de la cible, donc d'augmenter la distance et le temps de suivi. Le tableau 5 en annexe montre que le procédé choisit la loi $L_{i-1}$ au temps de suivi plus long que celui de la loi initiale $L_i$, lorsque la densité du trafic croît et en phases de déboîtement.

Si la vitesse de consigne du véhicule descend en dessous de la vitesse moyenne du trafic, le régulateur de distance va devenir un régulateur de vitesse et ce changement de phase donnera la main à la première étape $e_1$) du procédé, concernant l'estimation du style de conduite, pour la sélection de la nouvelle loi de conduite.

Selon une condition nécessaire à la prise en compte des actions sur les touches du volant, celles-ci doivent produire une variation de la vitesse de consigne supérieure à un seuil, fixé par exemple à 20 km/h en valeur absolue, pour adapter les lois sélectionnées, ceci dans le but d'empêcher la conduite du véhicule uniquement au moyen de ces deux touches "+" et "-" au volant.

Pour réaliser cette étape $e_6$) de modification des lois en fonction des actions du conducteur, le régulateur comporte un quatrième réseau de neurones dont les entrées reçoivent les informations sur :

- l'état des touches "+" et "-",
- l'état des touches "OFF" et "Resume",
- l'état des clignotants droit et gauche pour savoir si le véhicule est en scénario de déboîtement,
- la vitesse de consigne ($V_c$) choisie par le conducteur,
- la vitesse ($V_{ACC}$) du véhicule régulé,
- l'état des phares antibrouillard, car on arrête la régulation de distance ACC en cas de brouillard --il ne s'agit pas d'un procédé d'anti-collision--, et
- les essuie-glace car on augmente la distance de suivi lorsqu'il pleut.

Le réseau de neurones calcule trois probabilités d'appartenance à l'action du conducteur, qualifiées respectivement de "s'écarter de la cible", "ne rien faire" et "s'approcher de la cible", ces probabilités étant comprises entre les valeurs 0 et 1.

D'autres actions du conducteur sont possibles, soit un appui sur la pédale de frein, ce qui coupe immédiatement la régulation de distance ACC, soit un appui sur la pédale d'accélérateur, ce qui suspend la régulation provisoire sans la supprimer, ou un changement de rapport manuel de la boîte de vitesses automatique qui modifie éventuellement l'état de sortie du premier réseau de neurones sur le style du conducteur, le procédé effectuant alors une nouvelle sélection des lois de commande selon les scénarios routiers.

Quand le conducteur freine volontairement alors que le procédé de régulation de distance est en marche, le système recommence une étape $e_2$) d'estimation du caractère de freinage, quel que soit le scénario routier du véhicule. Lorsque le conducteur décidera de remettre en action la régulation de distance automatique, le procédé effectuera une nouvelle sélection des lois d'approche, de suivi, et de déboîtement à partir de cette nouvelle estimation.

Quand le conducteur accélère lui-même ou change le rapport de la boîte de vitesses, le procédé effectue une nouvelle estimation du style de conduite (étape $e_1$)), qui va faire évoluer les lois précédemment choisies par le régulateur à l'étape $e_3$), quel que soit le scénario routier.

Enfin, après l'étape $e_6$) de modification des lois aux actions du conducteur, le régulateur choisit à l'étape $e_7$) la loi de commande de l'accélération en fonction du scénario routier dans lequel évolue le véhicule et défini par le plan de phase. A l'étape $e_8$), le procédé applique la loi de régulation définie à l'étape précédente pour respecter automatiquement une distance de sécurité prédéterminée avec le véhicule cible.

Pour le confort de conduite et l'agrément de la prestation de cette régulation de distance adaptative, un conducteur est satisfait s'il ne réalise aucune action au volant ni aucune désactivation du procédé par la pédale de frein.

Le tableau 6 résume les différents moments de réalisation des estimations du style de conduite, de freinage, du trafic et quand sont prises en compte les actions du conducteur en fonction de l'état de la régulation de distance. Ainsi, le style de conduite et le trafic routier sont évalués quel que soit l'état de la régulation de distance, sauf en cas de panne. Le caractère de freinage est reconnu en temps réel à partir d'informations fournies par le radar du véhicule, soit la distance et la vitesse de la cible, couplées aux informations sur le véhicule régulé, comme la pression de freinage ou la décélération. La vitesse du véhicule est utilisée dans les critères de reconnaissance du trafic routier. Puisque le comportement du conducteur et le trafic routier sont évalués dès la mise en route du véhicule, il n'est plus nécessaire de les mettre dans une mémoire quand la régulation est arrêtée.

TABLEAU 1

|  | **Précoce** | **Standard** | **Tardif** |
|---|---|---|---|
| Calme | $L_1$; t=2s (temps de suivi) | $L_2$ ; t=1,6s | $L_2$ ; t=1,6s |
| Dynamique | $L_3$ ; t=1,4s | $L_4$ ; t=1,2s | $L_4$ ; t=1,2s |
| Sport | $L_4$ ; t=1,2s | $L_5$ ; t=1s | $L_5$ ; t=1s |

TABLEAU 2

|  | **Fluide** | **Normal** | **Dense** |
|---|---|---|---|
| Approche | $L_i$ | $L_{i-1}$ | $L_{i-2}$ |
| Suivi | $L_i$ | $L_{i+1}$ | $L_{i+2}$ |
| Déboîtement | $L_i$ | $L_i$ | $L_i$ |
| Insertion | $L_i$ | $L_i$ | $L_i$ |

TABLEAU 3

|  | Délai $t_1$ | Délai $t_2$ |
|---|---|---|
| Approche | $L_i$ | $L_i$ |
| Suivi | $L_{i-1}$ | $L_{i-2}$ |
| Déboîtement | $L_{i-1}$ | $L_{i-1}$ |
| Insertion | $L_i$ | $L_i$ |

TABLEAU 4

| Touche + et saut de VCons>20km/h | **Fluide** | **Normal** | **Dense** |
|---|---|---|---|
| Approche | $L_i$ | $L_i$ | $L_i$ |
| Suivi | $L_i$ | $L_{i+1}$ | $L_{i+1}$ |
| Déboîtement | $L_{i+1}$ | $L_{i+1}$ | $L_{i+1}$ |
| Insertion | $L_i$ | $L_i$ | $L_i$ |

TABLEAU 5

| Touche - et saut de VCons>20km/h | **Fluide** | **Normal** | **Dense** |
|---|---|---|---|
| Approche | $L_i$ | $L_i$ | $L_i$ |
| Suivi | $L_i$ | $L_{i-1}$ | $L_{i-1}$ |

TABLEAU 5   (suite)

| Touche - et saut de VCons>20km/h | **Fluide** | **Normal** | **Dense** |
|---|---|---|---|
| Déboîtement | $L_{i-1}$ | $L_{i-1}$ | $L_{i-1}$ |
| Insertion | $L_i$ | $L_i$ | $L_i$ |

## TABLEAU 6

| Etat ACC | Comportement du conducteur | | Influence du trafic | Actions du conducteur |
|---|---|---|---|---|
| | Calcul du style de conduite | Calcul du caractère de freinage | Calcul du trafic | Prise en compte des actions du conducteur |
| Off | Oui | Oui | Oui | Non |
| Inactif | Oui | Oui | Oui | Non |
| Désactivé | Oui | Oui | Oui | Non |
| Maintien | Oui | Non | Oui | Oui |
| Suspendu | Oui | Non | Oui | Oui |
| Défaut | Non | Non | Non | Non |
| Observation | Oui | Non | Oui | Oui |
| Approche | Oui | Non | Oui | Non |
| Insertion | Oui | Non | Oui | Non |
| Danger | Oui | Non | Oui | Non |
| Suivi | Oui | Non | Oui | Oui |
| Régulation de vitesse | Oui | Non | Oui | Oui |

EP 1 170 652 A1

**Revendications**

1. Procédé de régulation adaptative de la distance entre deux véhicules circulant dans la même direction, le véhicule régulé (S) suivant l'autre servant de cible (C) et comprenant des moyens de détection et de suivi de cibles mobiles, une interface de commande par le conducteur, comprenant différentes touches placées sur le volant du véhicule pour la marche et l'arrêt de la régulation de distance, ainsi que des touches d'augmentation et de diminution de la vitesse de consigne, et des moyens embarqués de commande électronique de l'accélération du véhicule selon différents scénarios routiers, qui sont définis à partir de la distance de consigne ($D_c$) entre le véhicule suiveur (S), circulant à la vitesse ($V_{ACC}$) et la cible suivie (C) se déplaçant à la vitesse ($V_{ci}$), la distance de consigne ($D_c$) est liée au temps de suivi ($t_s$) par la relation suivante :

$$D_c = t_s \times V_{ci} + D_{min}$$

($D_{min}$) correspondant à la distance de consigne lorsque la vitesse de la cible est nulle,
**caractérisé en ce qu'**il établit une loi de contrôle de l'accélération du véhicule en réglant graduellement le temps de suivi ($t_s$) entre le véhicule régulé et le véhicule cible, en fonction du comportement du conducteur défini par son style de conduite et son caractère de freinage, du trafic routier et des actions du conducteur identifiées avant et pendant la régulation de distance.

2. Procédé de régulation adaptative selon la revendication 1, **caractérisé en ce qu'**il comporte les étapes suivantes :

   - une première étape $e_1$) d'évaluation du style de conduite du conducteur du véhicule régulé à tout instant, avant la mise en marche de la régulation comme pendant son fonctionnement ;
   - une deuxième étape $e_2$) d'évaluation du caractère de freinage, réalisée lorsque la présence d'un véhicule cible est détectée et que la pression de freinage dépasse un seuil prédéterminé, cette évaluation ayant donc lieu avant la mise en marche de la régulation de distance et lorsque celle-ci est soit inactive, soit quand elle est désactivée, notamment par une pression du conducteur sur la pédale de frein ;
   - une troisième étape $e_3$) de choix d'une loi de contrôle de l'accélération en phases d'approche, de suivi, de déboîtement et d'insertion, en fonction du style de conduite et du caractère de freinage du conducteur ;
   - une quatrième étape $e_4$) d'estimation du trafic routier, réalisée à tout moment avant et pendant la régulation de distance ;
   - une cinquième étape $e_5$) d'adaptation en fonction du trafic routier des lois initialement sélectionnées ;
   - une sixième étape $e_6$) d'adaptation des lois initialement sélectionnées, en fonction des actions du conducteur sur les différentes touches de l'interface, ces actions devant être relativisées par rapport à la vitesse moyenne du trafic routier d'une part et par rapport à la vitesse de consigne sélectionnée d'autre part ;
   - une septième étape $e_7$) de sélection de la loi de commande de l'accélération en fonction du scénario routier dans lequel évolue le véhicule et défini par le plan de phase ;
   - une huitième étape $e_8$) d'application de la loi de commande de l'accélération pour respecter automatiquement une distance de sécurité prédéterminée avec le véhicule cible.

3. Procédé de régulation adaptative selon la revendication 2, **caractérisé en ce que** l'appréciation du style de conduite est effectuée par un premier réseau de neurones du régulateur de distance, que le procédé de régulation soit activé ou non, sauf en cas de panne, dont les entrées reçoivent :

   - la vitesse ($V_{ACC}$) du véhicule régulé,
   - le régime ($N_{ACC}$) de son moteur,
   - l'angle ($\alpha_{ACC}$) du papillon d'admission d'air,
   - le rapport ($n_{ACC}$) de la boîte de vitesses automatique,

   et qui délivre en sortie trois possibilités d'appartenance à trois états qualifiés respectivement de "calme", de "dynamique" et de "sportif", ces probabilités étant comprises entre les valeurs 0 et 1.

4. Procédé de régulation adaptative selon la revendication 3, **caractérisé en ce que** le premier réseau de neurones déterminant le style de conduite reçoit de plus, en entrée, l'angle ($\beta_v$) du volant et l'accélération ($\Gamma_t$) transversale du véhicule qui complètent la reconnaissance du style de conduite dans les virages pris par le véhicule.

5. Procédé de régulation adaptative selon la revendication 2, **caractérisé en ce que** le caractère de freinage est évalué au moyen d'un deuxième réseau de neurones qui est activé lorsque la présence d'un véhicule cible est détectée et la pression de freinage dépasse un seuil prédéterminé correspondant au décollement des machines de frein ou des plaquettes de frein, que le procédé de régulation soit activé ou non, sauf en cas de panne, les entrées de ce réseau de neurones recevant pour information :

- la pression de freinage ($P_f$) exercée par le conducteur,
- la décélération ($\Gamma_{dec}$) du véhicule pendant le freinage,
- la distance ($D_r$) et la vitesse ($V_r$) relatives de la cible par rapport au véhicule régulé,

pour qu'il délivre en sortie trois possibilités d'appartenance à trois états de freinage qualifiés de "précoce", de "standard" et de "tardif", comprises entre les valeurs 0 et 1.

6. Procédé de régulation adaptative selon l'une des revendications 2 à 5, **caractérisé en ce que** les lois de régulation de la distance, déterminées pour les phases d'approche, de suivi, de déboîtement et d'insertion en fonction du style de conduite et du caractère de freinage à l'étape $e_3$), imposent un temps de suivi entre le véhicule cible (C) et le véhicule régulé (S) qui varie de telle sorte que, pour un même style qualifié de calme, plus le freinage est qualifié de tardif, plus le temps de suivi ($t_s$) est court, et plus le style est qualifié de sportif et plus le freinage est qualifié de tardif, plus le temps de suivi est court, ne pouvant descendre cependant en dessous d'un seuil fixé notamment à 1 seconde.

7. Procédé de régulation adaptative selon la revendication 2, **caractérisé en ce que** le trafic routier est estimé par un troisième réseau de neurones dont les entrées reçoivent :

- la vitesse ($V_{ACC}$) du véhicule régulé,
- la liste des véhicules circulant à l'avant de ce dernier, sur toutes les voies de circulation, chaque véhicule cible étant **caractérisé par** sa distance ($D_r$) et sa vitesse ($V_r$) relatives par rapport au véhicule régulé, ainsi que par sa position ou son azimut,

et qui délivre en sortie trois probabilités d'appartenance à des états de trafic qualifiés respectivement de "fluide", de "normal" ou de "dense", ces probabilités étant comprises entre les valeurs 0 et 1.

8. Procédé de régulation adaptative selon la revendication 7, **caractérisé en ce que** la loi ($L_i$) de régulation de la distance sélectionnée initialement en fonction du style de conduite et du caractère de freinage à l'étape $e_3$), pour les quatre scénarios routiers d'approche, de suivi, de déboîtement et d'insertion, est modifiée en fonction de la densité du trafic routier de telle sorte que :

- en approche, le procédé adopte un style sécuritaire quand le trafic devient de plus en plus dense, en augmentant le temps de suivi ($t_s$), donc en provoquant le freinage du véhicule plus tôt,
- en suivi de la cible, le temps de suivi, donc la distance entre les véhicules, sont diminués pour que des véhicules ne viennent pas s'insérer entre le véhicule régulé (S) et sa cible (C) quand le trafic s'intensifie.

9. Procédé de régulation adaptative selon la revendication 8, **caractérisé en ce que**, dans le cas d'un suivi d'une cible se prolongeant au delà d'un premier seuil de durée prédéterminé, il adopte une approche sécuritaire en remplaçant la loi ($L_i$) de régulation sélectionnée auparavant par une loi ($L_{i-1}$) dont le temps de suivi, donc de la distance entre les deux véhicules, sont supérieurs.

10. Procédé de régulation adaptative selon la revendication 9, **caractérisé en ce que**, dans le cas d'un suivi d'une cible se prolongeant au-delà d'un second seuil de durée prédéterminée supérieur au premier seuil, il remplace la loi précédente. ($L_{i-1}$) par une loi ($L_{i-2}$) dont le temps de suivi et la distance entre les deux véhicules sont supérieurs.

11. Procédé de régulation adaptative selon la revendication 8, **caractérisé en ce que**, en déboîtement, la loi reste la loi initialement choisie ($L_i$), si ce déboîtement suit, dans un délai suffisamment court, un scénario d'approche d'une cible et si ce délai est dépassé, la loi est remplacée par la loi ($L_{i-1}$) avec une augmentation du temps de suivi.

12. Procédé de régulation adaptative selon la revendication 2, **caractérisé en ce qu'**il modifie, à l'étape $e_6$), la loi initiale ($L_i$) applicable en phase d'approche quel que soit l'état du trafic routier :

- quand le conducteur appuie sur la touche "+" de l'interface pour augmenter la vitesse de consigne, en diminuant la distance et le temps de suivi, considérant qu'il manifeste son intention de se rapprocher de la cible qu'il suit, lors des phases d'approche, de suivi, de déboîtement et d'insertion ;

- quand le conducteur appuie sur la touche "-" de l'interface pour diminuer la vitesse de consigne, en augmentant la distance et le temps de suivi, considérant qu'il manifeste son intention de s'éloigner de la cible.

13. Procédé de régulation adaptative selon la revendication 12, **caractérisé en ce que** la modification des lois de contrôle de l'accélération en fonction des actions du conducteur est réalisée par un réseau de neurones dont les entrées reçoivent les informations sur :

- l'état des touches "+" et "-" de variation de la vitesse de consigne,
- l'état des touches "OFF" et "Resume" de mise en marche de la régulation,
- l'état des clignotants droite et gauche pour savoir si le véhicule est en scénario de déboîtement,
- la vitesse de consigne ($V_c$) choisie par le conducteur,
- la vitesse ($V_{ACC}$) du véhicule régulé,
- l'état des phares antibrouillard, et
- les essuie-glace,

et qui délivre en sortie trois possibilités d'appartenance à trois états qualifiés respectivement de "s'écarter de la cible", "ne rien faire" et "s'approcher de la cible", ces probabilités étant comprises entre les valeurs 0 et 1.

14. Procédé de régulation adaptative selon la revendication 2, **caractérisé en ce que**, lorsque le conducteur freine volontairement alors que la régulation de distance est en marche, il recommence une étape $e_2$) d'estimation du caractère de freinage, quel que soit le scénario routier du véhicule, à partir de laquelle sera effectuée une nouvelle sélection des lois de contrôle de l'accélération du véhicule en phases d'approche, de suivi, d'insertion et de déboîtement, lorsque le conducteur décidera de remettre en action la régulation de distance automatique.

15. Procédé de régulation adaptative selon la revendication 2, **caractérisé en ce que**, lorsque le conducteur accélère lui-même ou change le rapport de la boîte de vitesses, il effectue une nouvelle estimation du style de conduite (étape $e_1$)), qui va faire évoluer les lois de contrôle de l'accélération du véhicule précédemment choisies par le régulateur à l'étape e3), quel que soit le scénario routier.

16. Procédé de régulation adaptative selon les revendications 9 et 10, **caractérisé en ce que** le premier seuil de durée est fixé à 20 minutes et le second seuil de durée est fixé à 40 minutes.

FIG.1

$$V_r = V_{C1} - V_{ACC}$$

ZONE D'INSERTION
$V_{ACC} < V_{C1}$
$D_r < D_c$

ZONE D'OBSERVATION
$V_{ACC} < V_{C1}$
$D_r > D_c$

ZONE DE SUIVI
$V_{ACC} = V_{C1}$
$D_r = D_c$

$D_r - D_c = D_e$

ZONE DE DANGER
$V_{ACC} > V_{C1}$
$D_r < D_c$

ZONE D'APPROCHE
$V_{ACC} > V_{C1}$
$D_r > D_c$

FIG.2

EP 1 170 652 A1

$e_1$

STYLE DU
CONDUCTEUR

$e_2$

CARACTERE
DU FREINAGE

$e_3$

LOIS D'APPROCHE,DE SUIVI,DE
DEBOITEMENT ET D'INSERTION

$e_4$

TRAFIC ROUTIER

$e_5$

MODIFICATION DES LOIS
DE CONTROLE

FIG.3

$e_6$

ADAPTATION DES LOIS
AUX ACTIONS DU CONDUCTEUR

$e_7$

LOI DE COMMANDE DE L'ACCELERATION
SELON LE SCENARIO ROUTIER

$e_8$

APPLICATION DE LA REGULATION
DE DISTANCE

**Office européen des brevets**

**RAPPORT DE RECHERCHE EUROPEENNE**

Numéro de la demande

EP 01 40 1812

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| Y | FR 2 770 016 A (RENAULT) 23 avril 1999 (1999-04-23) | 1 | G05D1/02 B60K31/00 |
| A | * page 7, alinéa 3 * --- | 2-16 | |
| Y | FR 2 738 196 A (RENAULT) 7 mars 1997 (1997-03-07) | 1 | |
| A | * page 1 * --- | 2-16 | |
| A | US 5 670 953 A (SATOH ET AL) 23 septembre 1997 (1997-09-23) * le document en entier * --- | 1-16 | |
| A | US 5 189 619 A (ADACHI ET AL) 23 février 1993 (1993-02-23) * le document en entier * --- | 1-16 | |
| A | EP 0 927 677 A (RENAULT) 7 juillet 1999 (1999-07-07) * le document en entier * --- | 1-16 | |
| A | FR 2 721 738 A (RENAULT) 29 décembre 1995 (1995-12-29) * le document en entier * ----- | 1 | **DOMAINES TECHNIQUES RECHERCHES (Int.Cl.7)** G05D G08G B60K |

Le présent rapport a été établi pour toutes les revendications

| Lieu de la recherche | Date d'achèvement de la recherche | Examinateur |
|---|---|---|
| LA HAYE | 15 octobre 2001 | Philippot, B |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 01 40 1812

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

15-10-2001

| Document brevet cité au rapport de recherche | | Date de publication | Membre(s) de la famille de brevet(s) | | Date de publication |
|---|---|---|---|---|---|
| FR 2770016 | A | 23-04-1999 | FR<br>EP<br>WO | 2770016 A1<br>1023195 A1<br>9920481 A1 | 23-04-1999<br>02-08-2000<br>29-04-1999 |
| FR 2738196 | A | 07-03-1997 | FR | 2738196 A1 | 07-03-1997 |
| US 5670953 | A | 23-09-1997 | JP<br>DE | 7251651 A<br>19509178 A1 | 03-10-1995<br>21-09-1995 |
| US 5189619 | A | 23-02-1993 | JP<br>JP<br>JP<br>JP | 2503681 B2<br>3092436 A<br>2700495 B2<br>3092437 A | 05-06-1996<br>17-04-1991<br>21-01-1998<br>17-04-1991 |
| EP 0927677 | A | 07-07-1999 | FR<br>EP | 2773130 A1<br>0927677 A1 | 02-07-1999<br>07-07-1999 |
| FR 2721738 | A | 29-12-1995 | FR | 2721738 A1 | 29-12-1995 |

EPO FORM P0460

Pour tout renseignement concernant cette annexe : voir Journal Officiel de l'Office européen des brevets, No.12/82